Europäisches Patentamt

European Patent Office

Office européen des brevets

(11) Publication number: **0 257 764 B1**

## EUROPEAN PATENT SPECIFICATION

(45) Date of publication of patent specification: **04.03.92**

(51) Int. Cl.⁵: **G11B 5/58**, G11B 17/32

(21) Application number: **87306256.6**

(22) Date of filing: **15.07.87**

(54) Disc drive systems.

(30) Priority: **02.08.86 JP 182344/86**

(43) Date of publication of application:
**02.03.88 Bulletin 88/09**

(45) Publication of the grant of the patent:
**04.03.92 Bulletin 92/10**

(84) Designated Contracting States:
**DE FR GB SE**

(56) References cited:

**IBM TECHNICAL DISCLOSURE BULLETIN vol. 25, no. 10, March 1983, pages 4968, 4969; T.R. FOURNIER ET AL.: "Cam-controlled head load/unload"**

**PATENT ABSTRACTS OF JAPAN vol. 10, no. 308 (P-508) (2364) 21. October 1986 & JP-A-61120372**

**PATENT ABSTRACTS OF JAPAN vol. 10. no. 147 (P-460) (2204) 29. May 1986 & JP-A-61 000 979**

**PATENT ABSTRACTS OF JAPAN vol. 10 no. 3 (P-148) (2060) 6. January 1986 & JP--a60 160 063**

**PATENT ABSTRACTS OF JAPAN vol. 9, no. 243 (P-392) (1966) 30. September 1985 & JP-A-60 095 758**

(73) Proprietor: **SONY CORPORATION**
**7-35 Kitashinagawa 6-Chome Shinagawa-ku Tokyo 141(JP)**

(72) Inventor: **Chaya, Masahiko c/o Patents Division**
**sion**
**Sony Corporation 7-35 Kitashinagawa Shinagawa-ku Tokyo 141(JP)**
Inventor: **Ozue, Tadashi c/o Patents Division**
**Sony Corporation 7-35 Kitashinagawa Shinagawa-ku Tokyo 141(JP)**

(74) Representative: **Pilch, Adam John Michael et al**
**D. YOUNG & CO. 10 Staple Inn**
**London WC1V 7RD(GB)**

## Description

This invention relates to disc drive systems for magnetic discs, which systems may be used in apparatus for recording and/or reproducing information signals to and/or from magnetic discs such as floppy discs.

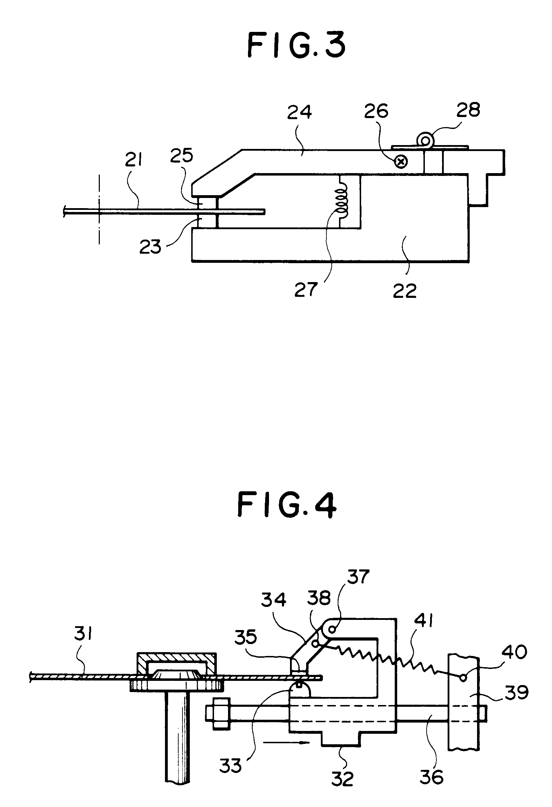

A disc drive system for recording and/or reproducing information signals to and/or from a floppy disc has previously been proposed, as shown in Figure 3 of the accompanying drawings. Referring to Figure 3, a floppy disc is sandwiched between a magnetic head 23 mounted at a front end of a carrier 22 and a magnetic head 25 mounted at a front end of a supporting arm 24. The carrier 22 is arranged to be movable along a guide shaft (not shown) in a radial direction relative to the disc 21. The supporting arm 24 is pivotable about a pivotal shaft 26, and is biased by a biasing means such as springs 27 and 28 in such a direction as to retain or hold the disc 21.

In the previously-proposed disc drive system shown in Figure 3, a fixed contact pressure is applied between the disc 21 and the magnetic heads 23 and 25 by the biasing means.

There has been disclosed in Japanese Patent Application Laid-open No. JP-A-6 095 758 another disc drive system for recording and/or reproducing information signals to a floppy disc, as shown in Figure 4 of the accompanying drawings. Referring to Figure 4, a floppy disc 31 is sandwiched between a magnetic head 33 mounted at a front end of a carrier 32 and a pad 35 mounted at a front end of a load arm 34. The carrier 32 is arranged to be movable along a guide shaft 36 in a radial direction with respect to the disc 31. The load arm 34 is pivotable about a pivotal shaft 37. A coil spring 41 is engaged at one end with a pin 38 on the load arm 34 and at the other end with a pin 40 on a member 39 provided for supporting the guide shaft 36. The pad 35 is pressed against the disc 31 by the vertical component of a spring force of the coil spring 41.

In the previously-proposed disc drive system in Figure 4, as the magnetic head 33 is moved towards the centre of the disc 31, the spring force of the coil spring 41 acting on the load arm 34 to provide a vertical force component thereupon is increased thereby to increase the contact pressure between the disc 31 and the magnetic head 33.

A floppy disc typically has a recording density of 10 K (BPI), for example, and it is rotated at 300 rpm during recording or reproduction. However, as a result of a desired increase in the recording density, there has recently been proposed a floppy disc having a recording density of 20 K (BPI), for example, this disc also being rotated at 300 rpm. Therefore, during reproduction of information using the conventional disc having a recording density of 10 K, the data transfer rate thereof may be equalised to that of the recently-proposed disc having a higher recording density by rotating the conventional disc at 600 rpm. In other words, compatibility between the two types of disc may be obtained by changing the rotational speed of one of the disc types.

However, in the above-mentioned previously-proposed disc drive system, when the rotational speed is changed from 300 rpm to 600 rpm, pressure due to air flow generated by the rotation of the disc is increased, which phenomenon is called an air bearing effect, thereby increasing the spacing distance of the magnetic head from the disc surface. As a result, the so-called spacing loss in the reproduced signal is increased, preventing good reproduction.

Japanese Laid Open Patent Specification 61-000979 discloses a magnetic disc arrangement in which a magnetic head is mounted on a bi-metallic arm and when a speed sensing device senses that the disc speed exceeds a threshold value, heating power is supplied to the bimetallic arm to cause it to bend to move the magnetic head towards the disc to offset floating of the magnetic head which would otherwise occur due to wind pressure.

According to the invention there is provided a disc drive system for a magnetic disc, the system comprising:
motor means for rotating the magnetic disc;
transducer means for transducing information from and onto the magnetic disc;
biasing means for biasing the transducer means against the magnetic disc with a biasing pressure dependent on the rotational speed of the magnetic disc; and
speed detecting means for detecting the rotational speed of the magnetic disc; wherein the motor means is operable selectively to rotate the magnetic disc at first or second rotational speeds, and the biasing means is operable to bias the transducer means with a first biasing pressure when the magnetic disc rotates at the first rotational speed and with a second biasing pressure when the magnetic disc rotates at the second rotational speed, the first rotational speed being higher than the second rotational speed, and the first biasing pressure being higher than the second biasing pressure.

Embodiments of the present invention, to be described in greater detail hereinafter, provide disc drive systems which may maintain the spacing distance of the magnetic head from the disc surface substantially constant, even when the rotational speed of the disc is changed.

Accordingly, in such a disc drive system, the spacing loss in the reproduced signal is prevented from being increased, irrespective of an increase in the rotational speed of the disc, thereby enabling good reproduction to take place.

According to embodiments of the present invention, when the rotational speed of the magnetic disc is increased, the contact pressure between the magnetic disc and the magnetic head is increased. As a result, the spacing distance of the magnetic heads from the surface of the magnetic disc is maintained substantially constant, irrespective of an increased rotational speed of the magnetic disc causing an increased air flow between the magnetic disc and the magnetic heads.

The invention will now be described by way of example with reference to the accompanying drawings, in which:

Figure 1 is a schematic illustration of a disc drive system according to a preferred embodiment of the present invention;

Figure 2 is a schematic illustration of a disc drive system according to another preferred embodiment of the present invention; and

Figures 3 and 4 are schematic illustrations of previously-proposed disc drive systems.

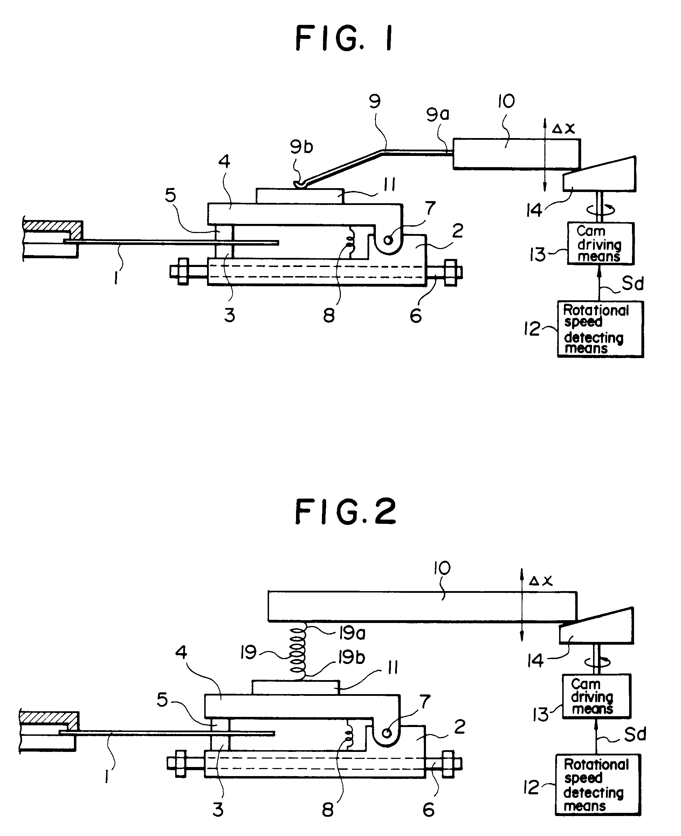

Referring now to Figure 1 which shows a disc drive system according to a preferred embodiment of the present invention, a floppy disc 1 is sandwiched between a magnetic head 3 mounted at a front end of a carrier 2 and a magnetic head 5 mounted at a front end of a supporting arm 4. The carrier 2 is arranged to be movable along a guide shaft 6 in a radial direction relative to the disc 1, for example, by driving a stepping motor (not shown).

The supporting arm 4 is swingable or pivotable about a pivotal shaft 7, and is biased by a coil spring 8 provided between the supporting arm 4 and the carrier 2 in such a direction as to retain or hold the disc 1.

A leaf spring 9 constituting a pressure means is fixed at one end 9a to a moving member 10 which is movable vertically (upwardly and downwardly), the other end 9b abutting against an upper surface of a pressure receiving member 11 fixed to the upper portion of the supporting arm 4. Thus, a pressure or force F is applied to the supporting arm 4 by the leaf spring 9.

A rotational speed detecting means 12 is provided for detecting the rotational speed of the disc 1. A detection signal Sd from the rotational speed detecting means 12 is supplied as a control signal to a cam driving means 13. A generally column-shaped cam 14 is formed at one end with an inclined surface, and a part of the inclined surface at a particular distance from the centre thereof is arranged to contact the moving member 10. A coil spring (not shown) functions to urge the moving member 10 against the inclined surface of the cam 14. The cam 14 is controlled so as to be rotated by the cam driving means 13 according to the detection signal Sd. As the moving member 10 contacts the inclined surface of the cam 14 in a range from a low level portion to a high level portion of the inclined surface by the rotation of the cam 14, the moving member 10 is moved upwardly and downwardly by a predetermined distance $\Delta x$ as measured from a given reference position. When the moving member 10 is moved by the predetermined distance $\Delta x$, the force F provided by the leaf spring 9 as applied to the supporting arm 4 is changed by $\Delta F$. Such a change $\Delta F$ in the force F may be express as follows:

$$\Delta F = f (k, \Delta x) \qquad (1)$$

where k is the spring constant of the leaf spring 9. As will be appreciated from Equation (1), the change $\Delta F$ is a function of the spring constant k and the distance $\Delta x$.

The rotational control of the cam 14 by the cam driving means 13 is carried out in such a manner that, as the rotational speed of the disc 1 increases, the lower level portion of the inclined surface of the cam 14 comes into contact with the moving member 10. In other words, as the rotational speed of the disc 1 increases, the moving member 10 is moved downwardly, and accordingly the force F of the leaf spring 9 on the supporting arm 4 is increased.

In operation, when the rotational speed of the disc 1 is increased, the pressure due to the air flow generated by the rotation of the disc 1 is also increased. As a result, the spacing distance of the magnetic heads 3 and 5 from the disc 1 tends to increase. However, according to the preferred embodiment, since the force F provided by the leaf spring 9, and therefore the contact pressure between the magnetic heads 3 and 5 and the disc 1 is increased, the spacing distance of the magnetic heads 3 and 5 from the disc 1 may be maintained substantially constant. Therefore, although the rotational speed of the disc 1 is increased, the spacing loss in the reproduced signal will not be increased, thereby enabling good reproduction to take place.

The rotational speed detecting means 12 may be designed to detect the rotational speed of the disc continuously and linearly change the position of the moving member 10 according to the detection result. Alternatively, in the case that the disc drive system is capable of selecting one of two speed levels, for example 300 rpm and 600 rpm, the rotational speed detecting means 12 may be designed to change the position of the moving member 10 in a dual-step manner and thereby select either of two levels of contact pressure between the disc 1 and the magnetic head 5. In this case, the loading pressure of the magnetic head may be automatically changed by a selection signal indicative of rotation at either 300 rpm or 600 rpm without actually detecting the rotational speed of the disc.

Even if the rotational or angular speed is kept constant, the relative speed between the magnetic heads 3 and 5 and the magnetic disc 1 changes in proportion to the radial position of the magnetic head. Thus, if more precise control of the head spacing is required, the loading pressure may be changed according to the radial position of the magnetic head or the relative speed between the magnetic head and the magnetic disc. The radial position of the magnetic head may be determined, for example, by reference to the position of the carrier 2 with respect to the guide shaft 6. The relative speed between the magnetic head and the magnetic disc may be determined, for example, by providing a suitable speed sensor adjacent the magnetic head 5. Either of these two alternative methods can be implemented in combination with the above-described disc drive system.

Referring next to Figure 2 which shows another embodiment of the present invention, a coil spring 19 is substituted for the leaf spring 9 shown in Figure 1. The coil spring 19 is fixed at one end 19a to the moving member 10, and the other end 19b abuts against the upper surface of the pressure receiving member 11 fixed to the upper portion of the supporting arm 4. Thus, a pressure or force F is applied to the supporting arm 4 by the coil spring 19. The arrangement of the other parts is similar to that in the previous embodiment shown in Figure 1.

Similarly, according to the second embodiment shown in Figure 2, as the rotational speed of the disc 1 increases, the moving member 10 is moved downwardly thereby to increase the force F of the coil spring 19 as applied to the supporting arm 4 with an increase in the rotational speed of the disc 1. Accordingly, the embodiment shown in Figure 2 may obtain the same effect as that of the previous embodiment shown in Figure 1.

Although the above-mentioned embodiments employ either the leaf spring 9 or the coil spring 19 for the pressure means, the pressure means may be provided by any suitable alternative arrangement, such as an elastic member formed of synthetic resin or natural resin. Further, although the above-mentioned embodiments employ the cam 14 as the means for moving the moving member 10, the moving means may instead include a gear, a plunger solenoid or a motor. Moreover, although the above-mentioned embodiments are applied to a recording and/or reproducing device for a floppy disc, similar arrangements may be applied to recording and/or reproducing devices for any other type of disc, such as a magnetic disc in the form of a hard disc.

## Claims

1. A disc drive system for a magnetic disc, the system comprising:

motor means for rotating the magnetic disc (1); transducer means (3, 5) for transducing information from and onto the magnetic disc (1); biasing means (9; 19) for biasing the transducer means (3, 5) against the magnetic disc (1) with a biasing pressure dependent on the rotational speed of the magnetic disc (1); and speed detecting means (12) for detecting the rotational speed of the magnetic disc (1); wherein the motor means is operable selectively to rotate the magnetic disc (1) at first or second rotational speeds, and the biasing means (9; 19) is operable to bias the transducer means (3, 5) with a first biasing pressure when the magnetic disc (1) rotates at the first rotational speed and with a second biasing pressure when the magnetic disc (1) rotates at the second rotational speed, the first rotational speed being higher than the second rotational speed, and the first biasing pressure being higher than the second basing pressure.

2. A disc drive system according to claim 1, wherein the motor means is operable to rotate the magnetic disc (1) at continuously different rotational speeds, and the biasing means (9; 19) is operable to bias the transducer means (3, 5) with a continuously variable biasing pressure in response to the speed detecting means (12), which biasing pressure increases as the speed increases.

## Revendications

1. Système d'unité de disque pour un disque magnétique, système comportant:

un moyen, constituant un moteur, pour entrainer en rotation le disque magnétique (1);

des moyens (3, 5) constituant des transducteurs pour transmettre l'information en provenance du disque magnétique (1) et sur ce disque magnétique;

des moyens de contrainte (9;19) pour contraindre les moyens (3, 5) constituant les transducteurs contre le disque magnétique (1), la pression de contrainte dépendant de la vitesse de rotation du disque magnétique (1); et

un moyen (12) de détection de la vitesse pour détecter la vitesse de rotation du disque magnétique (1); système dans lequel on peut activer sélectivement le moyen constituant le moteur pour entrainer en rotation le disque magnétique (1) à une première ou à une seconde vitesse de rotation, et dans lequel on peut activer les moyens de contrainte (9; 19) pour contraindre les moyens (3, 5) constituant les transducteurs avec une première pression de contrainte lorsque le disque magnétique (1) tourne à la première vitesse de rotation et avec une seconde pression de contrainte lorsque le disque magnétique (1) tourne à la seconde vitesse de rotation, la première vitesse de rotation étant supérieure à la seconde vitesse de rotation, et la première pression de contrainte étant supérieure à la seconde pression de contrainte.

2.  Système d'unité de disque conforme à la revendication 1, dans lequel on peut activer le moyen constituant le moteur pour entrainer le disque magnétique (1) à des vitesses de rotation variables de façon continue, et dans lequel on peut activer les moyens de contrainte (9; 19) pour contraindre les moyens (3, 5) constituant les transducteurs avec une pression de contrainte variable en continu en réponse aux moyens (12) de détection de la vitesse, pression de contrainte qui croît lorsque la vitesse croît.

**Patentansprüche**

1.  Plattenantriebssystem für eine Magnetplatte, umfassend:
    eine Motoreinrichtung zum Drehen der Magnetplatte (1);
    eine Signalumformungseinrichtung (3,5) zum Umformen von Information von und zu der Magnetplatte (1);
    eine Vorspannungseinrichtung (9;19) zum Vorspannen der Signalumformungseinrichtung (3,5) gegen die Magnetplatte (1) mit einem von der Drehzahl der Magnetplatte (1) abhängigen Vorspannungsdruck; und
    eine Drehzahlermittlungseinrichtung (12) zum Ermitteln der Drehzahl der Magnetplatte (1);
    wobei die Motoreinrichtung selektiv betreibbar ist, um die Magnetplatte (1) mit einer ersten oder einer zweiten Drehzahl zu drehen, und wobei die Vorspannungseinrichtung (9;19) betreibbar ist, um die Signalumformungseinrichtung (3,5) mit einem ersten Vorspannungsdruck vorzuspannen, falls sich die Magnetplatte (1) mit der ersten Drehzahl dreht und mit einem zweiten Vorspannungsdruck vorzuspannen, falls sich die Magnetplatte (1) mit der zweiten Drehzahl dreht, wobei die erste Drehzahl höher ist als die zweite Drehzahl, und der erste Vorspannungsdruck größer ist als der zweite Vorspannungsdruck.

2.  Plattenantriebssystem nach Anspruch 1, wobei die Motoreinrichtung die Magnetplatte (1) mit kontinuierlich verschiedenen Drehzahlen dreht, und wobei die Vorspannungseinrichtung (9;19) die Signalumformungseinrichtung (3,5) mit einem kontinuierlich variablen Vorspannungsdruck in Antwort auf die Drehzahlermittlungseinrichtung (12) vorspannt, wobei der Vorspannungsdruck mit steigender Drehzahl größer wird.

EP 0 257 764 B1

FIG. 1

FIG.2

6

# FIG.3

# FIG.4